# EUROPEAN PATENT APPLICATION

(11) **EP 4 477 430 A1**
(43) Date of publication of application: **18.12.2024**
(21) Application number: 24178750.6
(22) Date of filing: 29.05.2024
(51) Int. Cl.: B60B 1/00, B60B 21/02

(54) **RIM OF A BICYCLE WHEEL AND RELATED BICYCLE WHEEL**

(30) Priority: 13.06.2023 IT 202300012063
(71) Applicant: Campagnolo S.r.l., 36100 Vicenza (VI) (IT)
(72) Inventor: MEGGIOLAN, Mario, I-36051 CREAZZO (Vicenza) (IT)
(74) Representative: Porta & Consulenti Associati S.p.A.

(57) **Abstract**

The invention relates to a rim (10) of a bicycle wheel and to a bicycle wheel comprising such a rim. The rim (10) comprises an upper bridge (11) configured to allow mounting a tyre, a lower bridge (12) comprising a plurality of perforated spoke-attachment seats (12a) and two opposite sidewalls (20a, 20b) connecting the upper bridge (11) to the lower bridge (12). At least one of the two sidewalls (20a, 20b) comprises at least one recess (22) having an axial depth that increases moving in the recess (22) along a radial direction from the upper bridge (11) towards the lower bridge (12).

## Description

The invention relates to a rim of a bicycle wheel.

The invention also relates to a bicycle wheel comprising the aforementioned rim.

A rim of a bicycle wheel typically comprises an upper bridge configured to allow mounting a tyre (typically thanks to the provision of suitable fins), a lower bridge comprising a plurality of perforated spoke-attachment seats and two opposite sidewalls connecting the upper bridge with the lower bridge.

In the present description and in the attached claims, the term "perforated spoke-attachment seat" is used in the broadest sense, to include both a perforated seat in which a spoke is directly inserted, provided for example with an enlarged head or with a threading, and a perforated seat in which a nipple or other element configured to allow the attachment of the spoke to the rim is inserted.

Typically, in a cross section of the rim the portion of the rim defined by the two sidewalls and by the lower bridge is substantially U-shaped.

In the present description and in the following claims the following definitions apply.

The term "cross section" is used to indicate a section taken on a plane that intersects the rim and contains the rotation axis of the rim.

The term "radial" is used to refer to a direction perpendicular to the rotation axis of the rim and that intersects the lower bridge of the rim.

The term "circumferential" is used to refer to the direction of annular extension of the rim.

The term "axial" is used to refer to a direction substantially parallel to the rotation axis of the rim.

The terms "inner" and "outer" refer to any radial direction of the rim and indicate a position proximal to the rotation axis of the rim and a position distal from the rotation axis of the rim, respectively.

The term "radial extension" is used to indicate the distance between the upper bridge and the lower bridge, such a distance being measured in a cross section of the rim.

Typically, conventional rims have a radial extension that is substantially identical in the circumferential direction. In other words, the radial extension measured in a cross section of a conventional rim is identical to that measured in any other cross section of the same rim.

The Applicant has observed that, with the aim of improving the aerodynamic behavior of conventional rims, rims have been proposed having a variable radial extension in the circumferential direction. Examples of such rims are described in US 9610800B2 and US 10611188B2. Such rims have a lower bridge that, when seen laterally, i.e. in the axial direction, has a non-circular extension as a result of the provision of a plurality of projecting portions that project radially towards the center of the rim.

The Applicant has further observed that, again with the aim of improving the aerodynamic behavior of conventional rims, rims have been proposed whose sidewalls comprise a plurality of surface elements (protrusions or recesses) in order to reduce the aerodynamic resistance on the rim itself. Examples of such rims are described in US 20140265538A1.

The Applicant has thought about how to improve the aerodynamic behavior of conventional rims and has found a solution at least partially different from the one suggested by US 9610800B2, US 10611188B2 and US 20140265538A1.

Thus, the technical problem at the basis of the invention is that of providing a rim of a bicycle wheel having an aerodynamic behavior better than that of conventional rims.

The present invention relates, in a first aspect thereof, to a rim of a bicycle wheel, comprising:
- an upper bridge configured to allow mounting a tyre;
- a lower bridge comprising a plurality of perforated spoke-attachment seats;
- two opposite sidewalls connecting the upper bridge to the lower bridge;
characterized in that at least one of the two sidewalls comprises at least one recess having an axial depth that increases moving in the recess along a radial direction from the upper bridge towards the lower bridge.

In the present description and in the following claims, the term "axial depth" of a recess is used to indicate the distance in the axial direction between a point taken on the surface of the recess and the surface on which the sidewall that comprises the recess lies.

The term "recess" is used to indicate a portion of sidewall having an axial depth greater than that at the two portions of the same sidewall that, in the circumferential direction, are immediately before the recess and immediately after the recess, respectively. As a result, at all the points of a sidewall belonging to a recess the axial distance between the two sidewalls of the rim is less than that at all the points of the sidewall that do not belong to a recess.

The Applicant has found that the provision of at least one recess as described above on at least one sidewall of the rim provides the rim with a low aerodynamic resistance to the airflow coming from an axial direction (side wind) and from a direction parallel to the direction of travel of the bicycle (front wind).

The rim of the present invention can comprise at least one of the preferred features described below taken individually or in combination.

The Applicant deems that each of such features contributes to improving the aerodynamic behavior of the rim, facilitating the flow of the air over the sidewall of the rim and/or the detachment of the air from the sidewall of the rim.

Preferably, the axial depth of the at least one recess gradually increases in the radial direction.

Preferably, said at least one recess has a maximum axial depth at a circumferentially central portion thereof.

Preferably, the axial depth of the recess increases moving on the sidewall in the circumferential direction from a first circumferential end portion thereof towards said circumferentially central portion and decreases moving circumferentially from said circumferentially central portion towards a second circumferential end portion opposite to said first circumferential end portion.

Preferably, said at least one recess has a circumferential width, measured along a circumference lying on the sidewall, which increases moving in the recess along the radial direction from the upper bridge towards the lower bridge.

Preferably, said at least one recess extends in the radial direction up to the lower bridge.

Preferably, said circumferential width has its maximum at the lower bridge, more preferably on the lower bridge.

In this way, the recess defines on the sidewall of the rim a funnel-shaped area that allows the air conveyed in the recess to abandon the sidewall at the lower bridge with low aerodynamic resistance.

Preferably, said at least one recess has an axial depth that varies gradually moving in the recess along the radial direction.

Preferably, said at least one recess has an axial depth that varies gradually moving in the recess along the circumferential direction.

Due to the gradual variation of the axial depth of the recess in the radial and/or circumferential direction, the recess defines in the sidewall a valley-shaped three-dimensional area that does not have points of surface discontinuity, to the benefit of the structural strength of the rim. Possible points of surface discontinuity would indeed be undesired as they would constitute points of concentration of tension.

Preferably, said at least one recess comprises a portion of minimum depth corresponding to a portion of the recess having a minimum axial depth.

Preferably, said at least one recess comprises a portion of maximum depth corresponding to a portion of the recess having a maximum axial depth.

Preferably, said portion of minimum depth is closer to said upper bridge than said portion of maximum depth.

In some preferred embodiments, said at least one recess is symmetrical with respect to a radial direction that crosses said portion of minimum depth.

In other preferred embodiments, said at least one recess is asymmetrical with respect to a radial direction that crosses said portion of minimum depth.

In particularly preferred embodiments, said at least one sidewall comprises a plurality of recesses. Such recesses provide the sidewall with an "undulating" shape in the circumferential direction.

Hereinafter, the term "undulating" or "undulation" is used, when referred to a sidewall of the rim, to indicate a shape defined by a succession of projecting portions that project with respect to a reference plane, such projecting portions being separated by respective portions that do not project with respect to said reference plane or that project on the opposite side with respect to said reference plane. Each of the aforementioned projecting portions can be defined by an entirely curved surface, or by an only partially curved, or by a plurality of flat surfaces that follow one another to define a substantially curved surface.

More preferably, said recesses are evenly distributed on said at least one sidewall in the circumferential direction. In particular, the recesses are equally spaced from one another in the circumferential direction.

Preferably, each sidewall comprises said at least one recess.

More preferably, each sidewall comprises a plurality of recesses evenly distributed in the circumferential direction.

Even more preferably, the recesses of the two sidewalls are arranged symmetrically on opposite sides with respect to a diametral median plane of the rim. In this way, the rim has the same aerodynamic behavior at both sidewalls, with benefits not only in terms of aerodynamics, but also in terms of stability and maneuverability by the cyclist.

The term "diametral median plane" is used to indicate a plane orthogonal to the rotation axis of the rim and that divides the rim into two substantially equal parts.

Preferably, the lower bridge comprises a plurality of perforated spoke-attachment seats at the portions of sidewall that are without recesses. Such a provision facilitates insertion into the rim of the spoke or of the nipples or of inserts typically used to strengthen the rim-spoke coupling area (possibly provided with a nipple) particularly when the rim is made of a composite material, like for example a material comprising structural fibers selected among carbon fibers, glass fibers, boron fibers, synthetic fibers, aramid fibers, ceramic fibers and combinations thereof.

In a first preferred embodiment of the rim of the invention, the lower bridge has a substantially constant distance from a center of the rim in the circumferential direction.

In this case, the rim has an undulation only in the axial direction.

In a second preferred embodiment of the rim of the invention, the lower bridge comprises:
- at least one first circumferential portion having a first distance from a center of the rim;
- at least one second circumferential portion having a second distance from the center of the rim different from the first distance.

Preferably, said at least one second circumferential portion has a distance from the center of the rim greater than that of said at least one first circumferential portion.

Preferably, the lower bridge comprises a plurality of said first circumferential portions and a plurality of said second circumferential portions.

In this case, the rim has a "double undulation", i.e. both an undulation in the axial direction (due to the provision of the aforementioned recesses) and an undulation in the radial direction (due to the provision of the aforementioned first circumferential portions and second circumferential portions), with even greater benefits in terms of aerodynamic behavior.

Hereinafter, when referring to the lower bridge of the rim the term "undulating" or "undulation" is used to indicate a shape defined by a succession of projecting portions that project with respect to a reference circumference, such projecting portions being separated by respective portions that do not project with respect to said reference circumference or that project on the opposite side with respect to said reference circumference. Each of the aforementioned projecting portions can be defined by an entirely curved surface, or by an only partially curved surface, or by a plurality of flat surfaces that follow one another to define a substantially curved surface.

Preferably, the perforated spoke-attachment seats are arranged at the first circumferential portions.

Preferably, said first circumferential portions and said second circumferential portions alternate with one another.

Preferably, said first circumferential portions and said second circumferential portions are evenly distributed in the circumferential direction.

In particular, said first circumferential portions and said second circumferential portions are equally spaced from one another.

Preferably, at least one part of the first circumferential portion has a substantially constant distance from the center of the rim in the circumferential direction.

Preferably, at least one part of the second circumferential portion has a substantially constant distance from the center of the rim in the circumferential direction.

Preferably, the lower bridge comprises, between said at least one first circumferential portion and said at least one second circumferential portion, a joining portion defined by a curved surface.

The lower bridge thus does not have points of surface discontinuity, to the benefit of the structural strength of the rim.

Preferably, such a curved surface has a S-shaped profile defined by two circumferences that are in mutual contact at an inflection point.

Preferably, such an inflection point is arranged half way along the joining portion.

Preferably, a circumference of said two circumferences is tangent to said at least one first circumferential portion at a first joining point.

Preferably, the other circumference of said two circumferences is tangent to said at least one second circumferential portion at a second joining point.

Preferably, said two circumferences have different diameters.

In some preferred embodiments, said at least one recess is defined at said at least one first circumferential portion.

In other preferred embodiments, said at least one recess is defined at said at least one second circumferential portion.

In further preferred embodiments, said at least one recess is defined at said joining portion.

In a second aspect thereof, the present invention relates to a bicycle wheel comprising a rim in accordance with the first aspect of the present invention, a hub and a plurality of spokes connecting the hub to the rim. Therefore, such a wheel has the advantages and, preferably, the preferred features described above with reference to the rim of the invention.

Preferably, the spokes are connected to the lower bridge of the rim at said at least one first circumferential portion or at said at least one second circumferential portion.

More preferably, the spokes are connected to the rim at said at least one first circumferential portion.

Further features and advantages of the invention will be more evident from the description of preferred embodiments thereof made with reference to the appended drawings, wherein:
- figure 1 schematically shows a top side view of a bicycle wheel comprising a first embodiment of a rim according to the present invention;
- figure 2 schematically shows a perspective view of a portion of the rim of figure 1;
- figure 3 schematically shows two cross sections of the rim of figure 1, taken at the section planes A and B of figure 2 and overlapped to each other;
- figure 4 schematically shows a top side view of a portion of the rim of figure 1;
- figure 5 schematically shows a perspective view of a portion of a second embodiment of a rim according to the present invention;
- figure 6 schematically shows two cross sections of the rim of figure 5, taken at the section planes C and D of figure 5 and overlapped to each other;
- figure 7 schematically shows a perspective view of a portion of a third embodiment of a rim according to the present invention;
- figure 8 schematically shows a perspective view of a portion of a fourth embodiment of a rim according to the present invention.

The aforementioned figures are provided only for descriptive and illustrative purposes. The dimensions and proportions of what has been shown do not correspond to the real proportions and dimensions of the corresponding parts of the rim and of the wheel of the present invention.

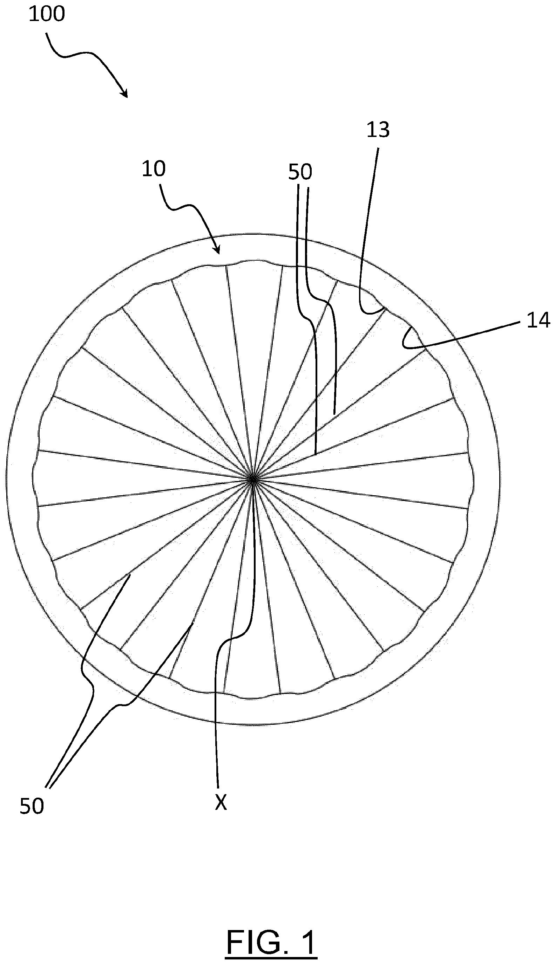

In figure 1, reference numeral 100 indicates a bicycle wheel comprising a first embodiment of a rim 10 in accordance with the present invention. For the sake of simplicity of illustration, figure 1 does not show the tyre and the hub of the wheel 100.

The rim 10 is particularly suitable for being used in tubeless wheels. Nevertheless, it should be understood that the invention described and claimed herein also applies to rims for wheels with an air chamber and for wheels with tubular tyres (clincher).

The rim 10 can be made of a metallic material or, at least partially, of a composite material.

In the present description and in the attached claims, the term "composite material" is used to indicate a material comprising a plurality of structural fibers incorporated in a polymeric material. Typically, the aforementioned structural fibers are unidirectional or bi-directional fibers.

The structural fibers are typically selected among carbon fibers, glass fibers, boron fibers, synthetic fibers, aramid fibers, ceramic fibers and combinations thereof, carbon fiber being particularly preferred due to their structural strength and lightness.

The polymeric material of the composite material can be thermoplastic or thermosetting. Preferably, such a material is a thermosetting resin. Typically, in the case of composite material including thermosetting polymeric material, the rim 10 is obtained through compression molding, whereas in the case of composite material including thermoplastic polymeric material the rim 10 is obtained through injection molding.

The rim 10 has a center X defined on an axis corresponding to the rotation axis of the wheel 100 and is connected to the hub of the wheel 100 through a plurality of spokes 50.

In the non-limiting example of figures 1-4 the rim 10 has a symmetrical shape with respect to the rotation axis and to a diametral middle plane of the rim 10. In such an embodiment, the spokes 50 extend along substantially radial directions, with a predetermined camber. However, alternative embodiments are foreseen in which the rim 10 has a non-symmetrical shape and/or where the spokes 50 extend along directions inclined with respect to the radial direction, with different cambers.

The rim 10 comprises an upper bridge 11, a lower bridge 12 and two opposite sidewalls 20a, 20b that connect the upper bridge 11 to the lower bridge 12.

The upper bridge 11 comprises opposite fins 11a, 11b configured to allow mounting the tyre.

A plurality of perforated spoke-attachment seats 12a, preferably substantially circular in shape, are made on the lower bridge 12. Each perforated seat 12a is configured to house an end portion of a respective spoke 50 or of a respective nipple or of other element configured to allow the attachment of the spoke 50 to the rim 10.

The perforated seats 12a are provided in positions required by the arrangement of the spokes of the particular wheel 100, in other words depending on the number of spokes 50, their distribution along the rim 10, their position in the cross section of the rim 10, and the direction taken up by each spoke 50, for example depending on the radial or tangential attachment thereof to the hub and/or the camber angle.

The lower bridge 12 has a radial distance from the center X of the rim 10 that varies in the circumferential direction. In particular, the lower bridge 12 comprises a plurality of first circumferential portions 13 and of second circumferential portions 14 alternating with and equally spaced from one another.

The first circumferential portions 13 have a radial distance from the center X shorter than that of the second circumferential portions 14.

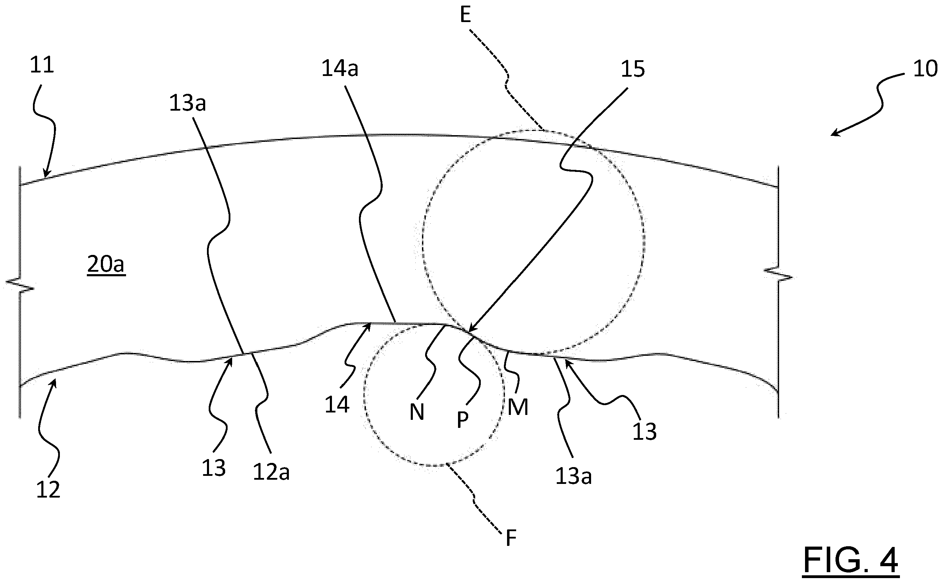

As shown in figure 4, the first and second circumferential portions 13, 14 have a circumferentially central part that has a substantially constant radial distance from the center X of the rim 10 in the circumferential direction, so as to define respective areas 13a, 14a with constant radius.

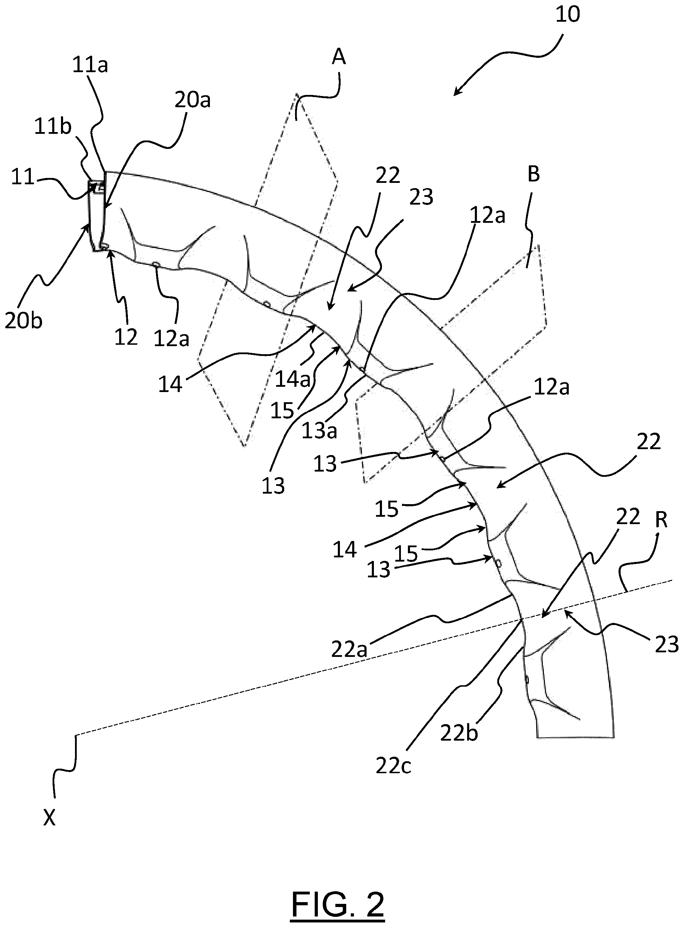

As shown in figure 2, the perforated seats 12a are made in the first circumferential portions 13, in particular in the area 13a with constant radius of the circumferentially central part of the first circumferential portions 13.

In alternative embodiments that are not shown, the perforated seats 12a are made in the second circumferential portions 14, in particular in the area 14a with constant radius of the circumferentially central part of the second circumferential portions 14.

In further alternative embodiments that are not shown, the perforated seats 12a are made both in the first circumferential portions 13 and in the second circumferential portions 14, in particular in the areas 13a, 14a with constant radius of the circumferential portions 13, 14.

In the non-limiting example of figure 2, each first circumferential portion 13 comprises, at a circumferentially central point thereof, a single perforated seat 12a. However, alternative embodiments are foreseen in which each circumferential portion 13 comprises more than one perforated seat 12a.

The lower bridge 12 comprises, between each first circumferential portion 13 and each second circumferential portion 14 adjacent thereto, a joining portion 15 preferably defined by a curved surface.

As shown in figure 4, such a curved surface has more preferably a S-shaped profile defined by two circumferences E and F that are in mutual contact at an inflection point P located substantially half way along the joining portion 15 when crossing it in the circumferential direction.

The circumference E joins to the first circumferential portion 13 at a first joining point M and the circumference F joins to the second circumferential portion 14 at a second joining point N. The joining points M and N define the ends of the joining portion 15.

In the joining point M, the circumference E and the first circumferential portion 13 share the same tangent line. Similarly, in the joining point N, the circumference F and the second circumferential portion 14 share the same tangent line. In other words, the areas between the first circumferential portion 13 and the joining portion 15 and between the joining portion 15 and the second circumferential portion 14 do not have steps or irregularities.

In the non-limiting example illustrated herein, the circumference E has a diameter greater than that of the circumference F. For example, the diameter of the circumference E is equal to 54 mm whereas that of the circumference F is equal to 38 mm.

At least one of the two sidewalls 20a, 20b of the rim 10 comprises a plurality of recesses 22, having preferably the same shape and being preferably equally spaced from one another in the circumferential direction.

In preferred embodiments, both the sidewalls 20a, 20b comprise a plurality of recesses 22 aligned in the axial direction. Preferably, such recesses 22 are arranged symmetrically on opposite sides with respect to a diametral middle plane of the rim 10.

As shown in figure 2, each recess 22 has an axial depth that varies gradually moving in the recess 22 along the radial direction and in the circumferential direction, defining a valley-shaped three-dimensional area in the respective sidewall 20a, 20b.

In particular, each recess 22 extends on the respective sidewall 20a, 20b in the radial direction up to the lower bridge 12 and has a circumferential width that increases gradually moving in the recess 22 along the radial direction from a portion of minimum depth 23 thereof, at which the recess 22 has a minimum circumferential width, towards the lower bridge 12, up to reach a maximum circumferential width at the lower bridge 12.

Moreover, each recess 22 has an axial depth that increases gradually moving in the recess 22 along the radial direction from the portion of minimum depth 23 thereof, at which the recess 22 has a minimum axial depth, towards the lower bridge 12, up to reach a maximum axial depth at the lower bridge 12.

More in particular, as shown in figure 2, each recess 22 is symmetrical with respect to a radial direction R that crosses the portion of minimum depth 23 of the recess 22 itself and the axial depth of the recess 22 increases moving in the recess 22 along the circumferential direction from a first circumferential end portion 22a thereof towards a circumferentially central portion 22c of the recess 22 and decreases moving circumferentially from the circumferentially central portion 22c towards a second circumferential end portion 22b opposite to the first circumferential end portion 22a. Therefore, each recess 22 has a maximum axial depth at the circumferentially central portion 22c thereof, more in particular at the aforementioned radial direction R, and at the lower bridge 12.

As shown in figure 2, the recesses 22 are defined at the second circumferential portions 14, but alternative embodiments, that are not shown, are foreseen wherein the recesses 22 are defined at the first circumferential portions 13.

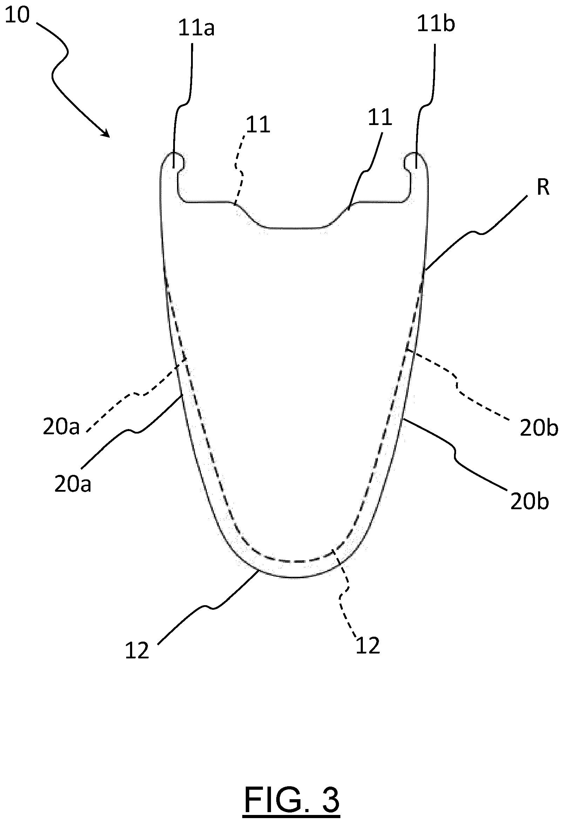

As shown in figures 2 and 3, the rim 10 has, at each of the first circumferential portions 13, a maximum cross section (one of these sections is shown with a solid line in figure 3 and is taken at the section plane A of figure 2) and, at each of the second circumferential portions 14, a minimum cross section (one of these sections is shown with a dashed line in figure 3 and is taken at the section plane B of figure 2).

In the areas with maximum cross section the axial distance between the sidewalls 20a and 20b and the radial distance between upper bridge 11 and lower bridge 12 is the maximum, whereas in the areas with minimum cross section the axial distance between the sidewalls 20a and 20b and the radial distance between upper bridge 11 and lower bridge 12 is the minimum.

The areas where the cross section is maximum therefore alternate in the circumferential direction with the areas where the cross section is minimum.

The rim 10 of figures 1-4 therefore has a shape such that the cross section thereof varies with continuity and without sharp portions between areas where the cross section is maximum and areas where the cross section is minimum. Thus, the rim 10 has an undulating shape both in the axial direction (due to the alternation on the sidewalls 20a and 20b of circumferential portions provided with recesses 22 and circumferential portions without recesses 22) and in the radial direction (due to the alternation on the lower bridge 12 of the first circumferential portions 13 and of the second circumferential portions 14).

In the embodiment illustrated herein, the areas where the cross section is maximum are provided in a radially outer position with respect to the first circumferential portions 13 and the areas where the cross section is minimum are provided in a radially outer position with respect to the second circumferential portions 14. Therefore, the perforated seats 12a are provided at the areas where the cross section is maximum.

The recesses 22 can extend in the radial direction for the entire radial extension of the sidewalls 20a and 20b of the rim 10, or only for a part of such a radial extension.

The point R shown in figure 3 and at which the recess 22 starts can therefore be arranged at any radial distance from the upper bridge 11.

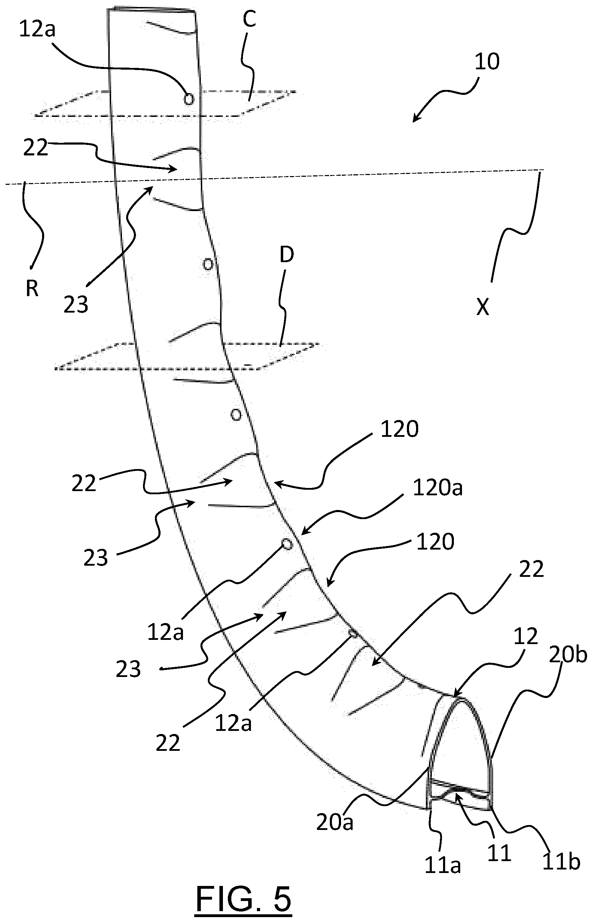

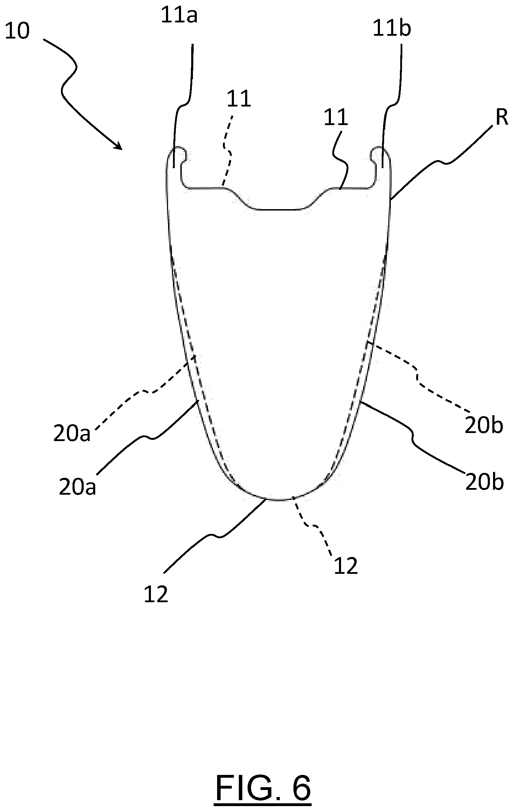

Figures 5 and 6 show a second preferred embodiment of the rim 10 according to the present invention.

The components of the rim 10 of figures 5 and 6 that are analogous or functionally equivalent to those of the rim 10 of figures 1-4 are indicated with the same reference numeral and for their description reference is made to what has been described herein above.

The rim 10 of figures 5 and 6 differ from the rim 10 of figures 1-4 essentially in that the lower bridge 12 has a substantially constant distance from the center X of the rim 10 in the circumferential direction, so that the radial distance between the upper bridge 11 and the lower bridge 12 is substantially equal in all the cross sections of the rim 10.

The rim 10 of figures 5 and 6 therefore has an undulating shape only in the axial direction, due to the alternation on the sidewalls 20a and 20b of circumferential portions provided with recesses 22 and of circumferential portions without recesses 22.

As shown in figure 5, the lower bridge 12 of the rim 10 of figures 5 and 6 comprises a plurality of circumferential portions 120a provided with perforated seats 12a alternating with a plurality of circumferential portions 120 that do not have perforated seats 12a.

The recesses 22 are provided on the sidewalls 20a, 20b in a radially outer position with respect to the circumferential portions 120.

Therefore, the rim 10 has, at each circumferential portion 120a, a maximum cross section (one of these sections is shown with a solid line in figure 6 and is taken at the section plane C of figure 5) and, at each circumferential portion 120, and therefore at each recess 22, a minimum cross section (one of these sections is shown with a dashed line in figure 6 and is taken at the section plane D of figure 5).

In the areas where the cross section is maximum the axial distance between the sidewalls 20a and 20b is the maximum, whereas in the areas where the cross section is minimum the axial distance between the sidewalls 20a and 20b is the minimum.

As shown in figure 5, also in the rim 10 of figures 5 and 6 each recess 22 is symmetrical with respect to a radial direction R that crosses the portion of minimum depth 23 of the recess 22 itself.

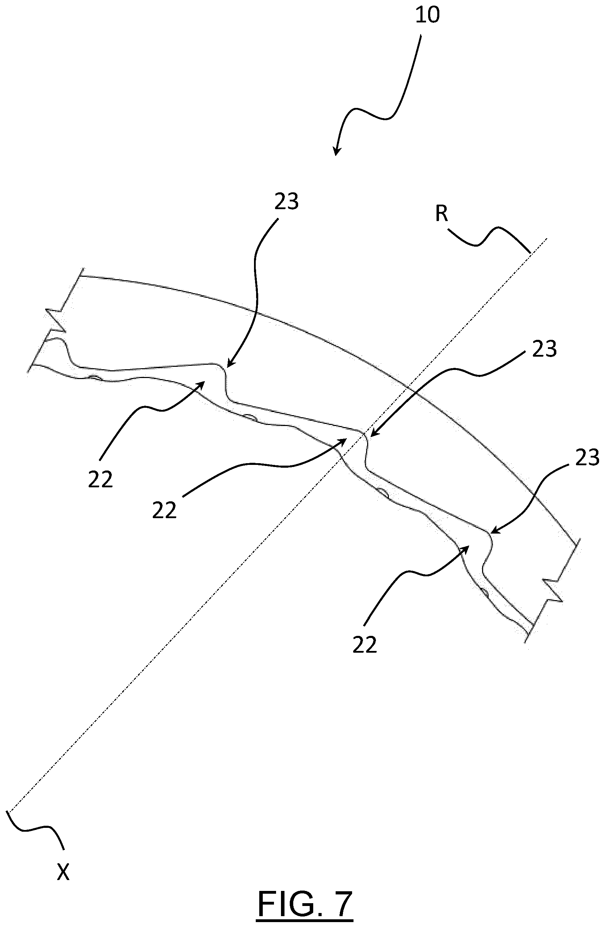

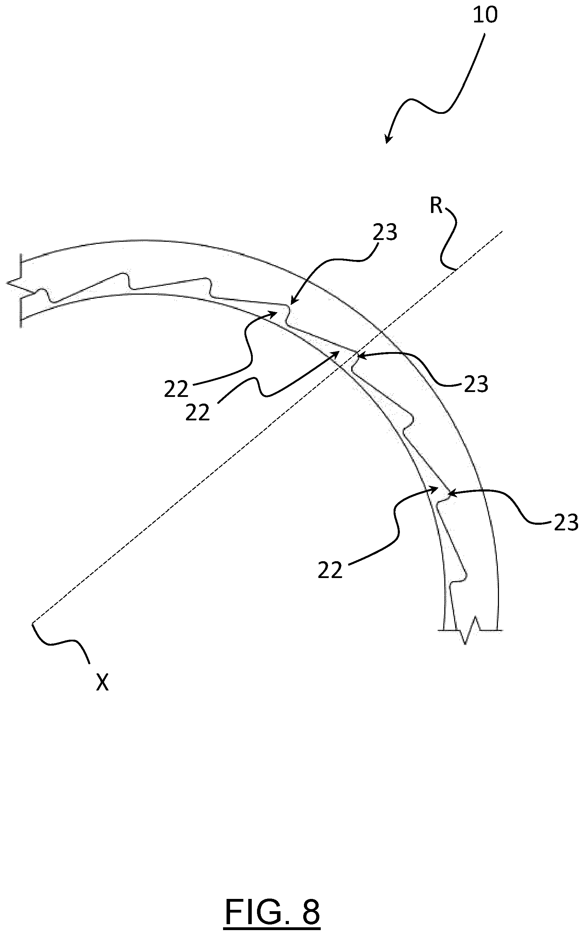

Figures 7 and 8 show two further alternative embodiments of the rim 10 of the present invention.

The rim 10 of figure 7 differs from the rim 10 of figures 1-4 essentially in that each recess 22 is asymmetrical with respect to the radial direction R that crosses the portion of minimum depth 23 of the recess 22 itself.

The components of the rim 10 of figure 7 that are analogous or functionally equivalent to those of the rim 10 of figures 1-4 are indicated with the same reference numeral and for their description reference is made to what has been described herein above.

In particular, the rim 10 of figure 7 also has an undulating shape both in the axial direction (due to the alternation on the sidewalls 20a and 20b of circumferential portions provided with recesses 7 and with circumferential portions without recesses 22) and in the radial direction (due to the alternation on the lower bridge 22 of the first circumferential portions 12 and of the second circumferential portions 13).

Similarly, the rim 10 of figure 8 differs from the rim 10 of figures 5 and 6 essentially in that each recess 22 is asymmetrical with respect to the radial direction R that crosses the portion of minimum depth 23 of the recess 22 itself.

The components of the rim 10 of figure 8 that are analogous or functionally equivalent to those of the rim 10 of figures 5 and 6 are indicated with the same reference numeral and for their description reference is made to what has been described above.

In particular, the rim 10 of figure 8 has an undulating shape only in the axial direction, due to the alternation on the sidewalls 20a and 20b of circumferential portions provided with recesses 22 and of circumferential portions without recesses 22.

Obviously, those skilled in the art, for the purpose of satisfying specific and contingent needs, can make numerous modifications and variants to the present invention, all of them, being within the scope of protection defined by the following claims.

## Claims

1. Rim (10) of a bicycle wheel (100), comprising:
- an upper bridge (11) configured to allow mounting a tyre;
- a lower bridge (12) comprising a plurality of perforated spoke-attachment seats (12a);
- two opposite sidewalls (20a, 20b) connecting the upper bridge (11) to the lower bridge (12);
**characterized in that** at least one of the two sidewalls (20a, 20b) comprises at least one recess (22) having an axial depth that increases moving in the recess (22) along a radial direction from the upper bridge (11) towards the lower bridge (12).

2. Rim (10) according to claim 1, wherein said at least one recess (22) is symmetrical or asymmetrical with respect to a radial direction that crosses a portion of minimum depth (23) of the recess (22).

3. Rim (10) according to claim 1 or 2, wherein said at least one recess (22) has a maximum axial depth at a circumferentially central portion (22c) thereof.

4. Rim (10) according to any one of the previous claims, wherein said at least one recess (22) has a circumferential width, measured along a circumference lying on the sidewall, which increases moving in the recess (22) along the radial direction from the upper bridge (11) towards the lower bridge (12).

5. Rim (10) according to claim 3, wherein said at least one recess (22) extends in the radial direction up to the lower bridge (12), and wherein said circumferential width is maximum at the lower bridge (12), optionally on the lower bridge (12).

6. Rim (10) according to any one of the previous claims, wherein said at least one recess (22) has an axial depth that varies gradually moving in the recess (22) along the radial direction and in a circumferential direction, defining a valley-shaped three-dimensional area in the sidewall (20a, 20b).

7. Rim (10) according to any one of the previous claims, wherein said at least one sidewall (20a, 20b) comprises a plurality of recesses (22), preferably distributed on said at least one sidewall (20a, 20b) evenly in a circumferential direction.

8. Rim (10) according to any one of the previous claims, wherein the lower bridge (12) has a substantially constant distance from a center (X) of the rim (10) in a circumferential direction.

9. Rim (10) according to any one of claims 1 to 7, wherein the lower bridge (12) comprises:
- at least one first circumferential portion (13) having a first distance from a center (X) of the rim (10);
- at least one second circumferential portion (14) having a second distance from the center (X) of the rim (10) different from the first distance.

10. Rim (10) according to claim 9, wherein the lower bridge (12) comprises a plurality of said first circumferential portions (13) and a plurality of said second circumferential portions (14), preferably alternating with one another and distributed evenly in a circumferential direction.

11. Rim (10) according to claim 9 or 10, wherein the lower bridge (12) comprises, between said at least one first circumferential portion (13) and said at least one second circumferential portion (14), a joining portion (15) defined by a curved surface.

12. Rim (10) according to claim 11, wherein said curved surface has an S-shaped profile defined by two circumferences (E, F) that are in mutual contact at an inflection point (P) preferably located half way along the joining portion (15), and wherein a circumference (E) of the two circumferences (E, F) is tangent to said at least one first circumferential portion (13) at a first joining point (M) and the other circumference (F) of said two circumferences (E, F) is tangent to said at least one second circumferential portion (14) at a second joining point (N).

13. Rim (10) according to any one of claims 9 to 12, wherein said at least one recess (22) is defined at one from said at least one first circumferential portion (13), said at least one second circumferential portion (14) and said joining portion (15).

14. Bicycle wheel (100) comprising a rim (10) according to any one of claims 1 to 13, a hub and a plurality of spokes (50) connecting the hub to the rim (10).

15. Bicycle wheel (100) according to claim 14, comprising a rim (10) according to any one of claims 9 to 13, wherein the spokes (50) are connected to the lower bridge (12) of the rim (10) at said at least one first circumferential portion (13) or at said at least one second circumferential portion (14).
